# EUROPÄISCHE PATENTSCHRIFT

(11) **EP 0 934 672 B1**
(45) Veröffentlichungstag und Bekanntmachung des Hinweises auf die Patenterteilung: **21.07.2004**
(21) Anmeldenummer: 97946739.6
(22) Anmeldetag: 22.10.1997
(51) Int. Cl.: H04Q 7/38, H04B 7/26

(54) **VERFAHREN ZUM ORTSABHÄNGIGEN ANMELDEN EINES MOBILEN ENDGERÄTES**
LOCATION DEPENDENT MOBILE COMMUNICATION TERMINAL LOG ON METHOD
PROCEDE DE CONNEXION, EN FONCTION DU LIEU, D'UN TERMINAL MOBILE

(30) Priorität: 23.10.1996 DE 19643723
(43) Veröffentlichungstag der Anmeldung: 11.08.1999
(73) Patentinhaber: SIEMENS AKTIENGESELLSCHAFT, 80333 München (DE)
(72) Erfinder: MORPER, Hans-Jochen, D-85253 Erdweg (DE)
(86) Internationale Anmeldenummer: PCT/DE1997/002460
(87) Internationale Veröffentlichungsnummer: WO 1998/018274

(56) Entgegenhaltungen:
- "Radio Equipment and Systems (RES); Digital Enhanced Cordless Telecommunications (DECT); Common Interface (CI); part 6: Identities and Addressing Second Edition" EUROPEAN TELECOMMUNICATION STANDARD, Bd. ETSI ETS 300-175-6, 1996, Seiten 1-42, XP002072371

## Beschreibung

Die Erfindung betrifft ein Verfahren zum ortsabhängigen Anmelden eines mobilen Endgerätes über eine Luftschnittstelle an einer Basisstation eines Kommunikationsnetzes, wobei die Basisstation mit einer ersten Periodizität eine Funkstationskennung mit Primärzugriffskennung und mit einer zweiten Periodizität eine Sekundärzugriffskennung jeweils als Schicht-2-Nachricht aussendet, in dem Endgerät mindestens ein Teil der Primärzugriffskennung bzw. der Sekundärzugriffskennung mit mindestens einem Teil von im Endgerät gespeicherten Subskriptionsdaten verglichen wird und das Endgerät sich bei positivem Vergleichsergebnis als Heimat-Endgerät bzw. als Gast-Endgerät an der Basisstation anmeldet.

Solche Verfahren werden in Kommunikationsnetzen bzw. Kommunikationsanlagen mit Mobilfunkfunktion bzw. mit Schnurlosfunktion benutzt. Solche Kommunikationsnetze oder Kommunikationsanlagen können beispielsweise gemäß dem GSM-Standard für Mobilfunknetze, gemäß dem Standard DCS1800 für Mobilfunknetze oder gemäß dem DECT-Standard für Schnurloskommunikationsnetze oder Kommunikationsanlagen konzipiert sein, siehe z.B. ETSi DECT-Standard ETS 300 175-6, September 1996, Part 6: Identities and addressing. Wenn in solchen Kommunikationsnetzen oder an solchen Kommunikationsanlagen ein Endgerät als benutzungsberechtigt angemeldet wird, werden für das Endgerät spezifische Kenndaten in der Kommunikationsanlage bzw. dem Kommunikationsnetz gespeichert und für die Kommunikationsanlage bzw. das Kommunikationsnetz oder eine Basisstation spezifische Kenndaten werden als Subskriptionsdaten innerhalb des Endgerätes gespeichert. Innerhalb des Endgerätes bedeutet im Falle von Endgeräten gemäß dem GSM-Standard, daß die Subskriptionsdaten in einer sogenannten SIM-Speicherkarte gespeichert sind. Wird diese Speicherkarte in ein anderes Endgerät eingelegt, so ist dieses andere Endgerät bezüglich des Kommunikationsnetzes zugriffsberechtigt.

Bei Kommunikationsendgeräten gemäß dem Schnurlosstandard DECT (Digital Enhanced Cordless Telecommunication) sind die Subskriptionsdaten üblicherweise in einem dem Endgerät fest zugeordneten Speicher abgelegt.

In einem Kommunikationssystem gemäß dem DECT-Standard sendet eine Basisstation in regelmäßigen Abständen eine Schicht-2-Nachricht mit einer Funkstationskennung RFPI (Radio Fixed Part Identity), die mindestens eine Primärzugriffskennung PARI (Primary Access Rights Identity) und eine Funkstationsnummer RPN (Radio Fixed Part Number) enthält. Wenn innerhalb der Kommunikationsanlage bzw. dem Kommunikationsnetz auch Endgeräte eines anderen Netzes oder einer anderen Anlage zugelassen sind, sendet die Basisstation außerdem in größeren Abständen die Primärzugriffskennung dieser anderen Anlage bzw. des anderen Netzes als Sekundärzugriffskennung SARI (Secundary Access Right Identity) als Schicht-2-Nachricht aus (Broadcasting). Ein im Funkbereich einer Basisstation befindliches Endgerät enthält eine internationale Benutzerkennung IPUI (International Portable User Identity), mit Hilfe der sich der Teilnehmer gegenüber dem Netz identifiziert. Diese internationale Benutzerkennung IPUI sendet das Endgerät bei einem Verbindungsaufbau bzw. bei einem ortsabhängigen Anmelden (Location Registration) zu einer Basisstation. Außerdem enthält ein Endgerät als Subskriptionsdaten mindestens einen Schlüssel für portable Zugriffsrechte PARK (Portable Access Rights Key) und einen POPEARK-Längenanzeiger PLI (PARK Length Indicator). Mit den Identitäten PARK und PLI kann ein Endgerät ermitteln, ob es Zugriffsrechte gegenüber einer Basisstation oder einem daran angeschlossenen Netz besitzt. Zum ortsabhängigen Anmelden eines mobilen Endgerätes nach dem DECT-Standard vergleicht das Endgerät die Primärzugriffskennung PARI einer empfangenen Funkstationskennung RFPI mit dem in seinem Subskriptionsdatenspeicher gespeicherten Schlüssel für portable Zugriffsrechte PARK, um festzustellen, ob es Heimat-Endgerät dieser Basisstation oder des angeschlossenen Netzes ist. Ist dies nicht der Fall, vergleicht das Endgerät von einer Basisstation ausgesendete Sekundärzugriffskennungen SARI mit seinen Subskriptionsdaten, um festzustellen, ob es bezüglich diese Sekundärzugriffskennung aussendenden Basisstation als Gast-Endgerät zugriffsberechtigt ist. Erkennt sich das Endgerät als zugriffsberechtigt, so veranlaßt es ein ortsabhängiges Anmelden an dieser Basisstation.

Wenn ein Netzbetreiber eines mobilen Netzes oder eines Schnurlosnetzes seine Primärzugriffskennung aus irgendwelchen Gründen ändert, so ist beispielsweise im DECT-Standard ein Aktualisierungsmechanismus vorgesehen, der es über die Basisstationen des Netzes ermöglicht, die Subskriptionsdaten zugelassener Endgeräte zu aktualisieren. Hierbei tritt das Problem auf, daß durch eine solche Aktualisierungsprozedur nur die Endgeräte erreichbar sind, die sich im eingeschalteten Zustand betriebsbereit im Sende-/Empfangsbereich des Kommunikationsnetzes bzw. der Kommunikationsanlage befinden. Wenn ein Endgerät sich während des Änderns der Primärzugriffskennung eines Kommunikationsnetzes oder einer Kommunikationsanlage nicht im Sende-/Empfangsbereich dieses Netzes bzw. dieser Anlage befindet, werden die Subskriptionsdaten dieses Endgerätes nicht aktualisiert und das Endgerät kann zu einem späteren Zeitpunkt nicht mehr auf das Netz zugreifen.

Aufgabe der Erfindung ist es, ein Verfahren anzugeben, das nach dem Ändern der Primärzugriffskennung einer Kommunikationsanlage oder eines Kommunikationsnetzes den Betrieb der an dieser Anlage oder diesem Netz zugelassenen Endgeräte sicherstellt.

Diese Aufgabe löst die Erfindung durch ein Verfahren mit den im Anspruch 1 angegebenen Merkmalen. Günstige Weiterbildungen der Erfindung sind Gegenstand von Unteransprüchen.

Ein erfindungsgemäßes Verfahren zum ortsabhängigen Anmelden eines mobilen Endgerätes über eine Luftschnittstelle an einer Basisstation eines Kommunikationsnetzes ermöglicht auch nach dem Ändern der Primärzugriffskennung des Kommunikationsnetzes und somit nach dem Ändern der von einer Basisstation ausgesendeten Funkstationskennung den Zugriff eines Endgerätes über diese Basisstation zu diesem Kommunikationsnetz, wenn die Subskriptionsdaten des Endgerätes nicht an die neue Primärzugriffskennung des Kommunikationsnetzes angepaßt worden sind. Hierzu sendet die Basisstation nach dem Ändern der von ihr ausgesendeten Primärzugriffskennung die von ihr vor dem Ändern ausgesendete Primärzugriffskennung als Sekundärzugriffskennung aus. Dadurch hat ein Endgerät, dessen Subskriptionsdaten nicht an die neue Primärzugriffskennung angepaßt worden sind zwar nicht die Möglichkeit, sich abhängig von der die Primärzugriffskennung enthaltenden Funkstationskennung RFPI an der Basisstation anzumelden, es hat jedoch die Möglichkeit, sich über die Sekundärzugriffskennung SARI als Gast-Endgerät an der Basisstation anzumelden.

Wenn ein solches Endgerät an der Basisstation angemeldet ist, kann beispielsweise innerhalb des Kommunikationsnetzes anhand der internationalen Benutzerkennung IPUI festgestellt werden, daß es sich hierbei eigentlich um ein Heimat-Endgerät handelt und mit Hilfe einer Aktualisierungsprozedur können die Subskriptionsdaten in diesem Endgerät an die neue Primärzugriffskennung PARI angepaßt werden.

Vorzugsweise wird das erfindungsgemäße Verfahren solange verwendet, bis die Subskriptionsdaten aller in dem Kommunikationsnetz angemeldeten Endgeräte aktualisiert sind. Hierzu kann in einer Weiterbildung des erfindungsgemäßen Verfahrens vorgesehen sein, daß bei Anmelden eines Endgerätes als Gast-Endgerät an einer Basisstation innerhalb des Kommunikationsnetzes überprüft wird, ob dieses Endgerät ein Heimat-Endgerät ohne aktualisierte Subskriptionsdaten ist. Daraufhin können mit Hilfe der Aktualisierungsprozedur die Subskriptionsdaten dieses Endgerätes aktualisiert werden und in einer Weiterbildung eines solchen erfindungsgemäßen Verfahrens kann nach jedem solchem Aktualisierungsprozeß im Kommunikationsnetz überprüft werden, ob alle zu aktualisierenden Endgeräte einer Aktualisierungsprozedur unterzogen worden sind. Bei positivem Überprüfungsergebnis kann daraufhin das Aussenden der vor dem Ändern ausgesendeten Primärzugriffskennung als Sekundärzugriffskennung beendet werden.

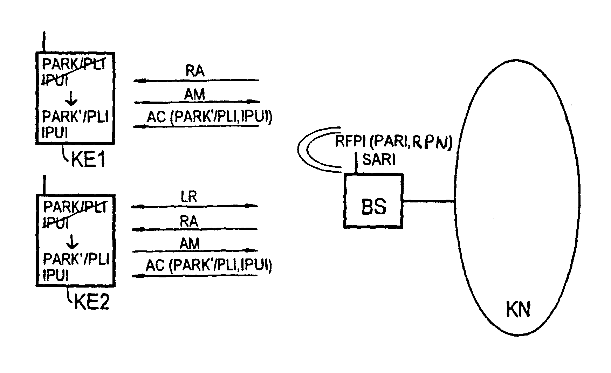

Nachstehend wird die Erfindung unter Bezugnahme auf die Figur näher erläutert.

Die Figur zeigt ein Kommunikationsnetz KN, das beispielsweise ein öffentliches Kommunikationsnetz, ein privates Kommunikationsnetz oder eine private Nebenstellenanlage sein kann. Zu diesem Kommunikationsnetz KN gehörig ist eine Basisstation BS dargestellt, um eine Luftschnittstelle des Kommunikationsnetzes zu bilden. Außerdem sind in der Figur zwei Endgeräte KE1 und KE2 dargestellt. Die Endgeräte KE1 und KE2 gemäß dem Ausführungsbeispiel arbeiten nach dem DECT-Standard und enthalten Subskriptionsdaten einschließlich einer internationalen Benutzerkennung IPUI, eines Schlüssels für portable Zugriffsrechte PARK und eines Schlüssellängenanzeigers PLI.

Um das ortsabhängige Anmelden von Endgeräten KE1, KE2 an der Basisstation BS zu ermöglichen, sendet die Basisstation mit einer ersten Periodizität eine Funkstationskennung RFPI, die eine Primärzugriffskennung PARI und eine Funkstationsnummer RPN enthält. Diese Funkstationskennung RFPI wird als Schicht-2-Nachricht ohne Zielrichtung ausgesandt, also gebroadcastet. Im Sende-/Empfangsbereich der Basisstation BS befindliche Endgeräte KE1, KE2 vergleichen die Primärzugriffskennung PARI und gegebenenfalls den Zugriffskennungslängenanzeiger PLI mit mindestens einem Teil der in ihnen gespeicherten Subskriptionsdaten. Bei positivem vergleichsergebnis meldet sich das Endgerät KE1 bzw. KE2 mit Hilfe einer Location-Registration-Meldung an der Basisstation BS an. Die Figur zeigt zwischen der Basisstation BS und dem Endgerät KE1 den Informationsfluß, der bei einem Ändern der von der Basisstation BS ausgesandten Primärzugriffskennung PARI veranlaßten Ablauf einer Aktualisierungsprozedur für den Fall, daß das Endgerät KE1 zu diesem Zeitpunkt von der Basisstation erreichbar ist. Für das gezeigte Ausführungsbeispiel wird davon ausgegangen, daß zu diesem Zeitpunkt das Endgerät KE2 von der Basisstation nicht erreichbar ist.

Bei einer Änderung der Primärzugriffskennung PARI des Kommunikationsnetzes KN bzw. der Basisstation BS wird über die Basisstation BS zu allen erreichbaren Endgeräten, im Ausführungsbeispiel dem Endgerät KE1, eine Resubskriptionsaufforderung RA gesandt, die vom Endgerät KE1 als Aktualisierungs-Initialisierung der Subskriptionsdaten PARK. PLI, IPUI interpretiert wird. Das Endgerät KE1 sendet daraufhin eine Aktualisierungsaufforderungsmeldung AM an die Basisstation BS, woraufhin die Basisstation eine Axept-Meldung mit den aktualisierten Subskriptionsdaten PARK', PLI, IPUI gesendet wird. Daraufhin werden die im Endgerät KE1 gespeicherten Subskriptionsdaten PARK, PLI, IPUI in die Subskriptionsdaten PARK', PLI, IPUI geändert.

Da das Endgerät KE2 zu diesem Zeitpunkt nicht von der Basisstation BS erreichbar war, ist nach diesem Zeitpunkt ein Zugriff des Endgerätes KE2 aufgrund der von der Basisstation BS ausgesendeten Funkstationskennung RFPI mit der geänderten Primärzugriffskennung PARI nicht mehr möglich. Daher kann die Basisstation über diesen Mechanismus auch keine Aktualisierungsinitialisierung zu dem Endgerät KE2 übermitteln. Erfindungsgemäß sendet die Basisstation BS mit einer zweiten Periodizität, im Ausfuhrungsbeispiel seltener, als die Funkstationskennung RFPI, die ursprüngliche, nicht geänderte Primärzugriffskennung PARI als Sekundärzugriffskennung SARI in Form einer Schicht-2-Nachricht aus. Wenn das Endgerät KE2 diese Sekundärzugriffskennung SARI empfängt, vergleicht sie diese mit seinen Subskriptionsdaten PARK, PLI, IPUI und meldet sich im Rahmen einer Location-Registration LR an der Basisstation BS an. Daraufhin erkennt das Kommunikationsnetz KN anhand der internationalen Benutzerkennung IPUI des Endgerätes KE2, daß es sich bei diesem, als Gast-Endgerät angemeldeten Endgerät um ein Heimat-Endgerät handelt, dessen Subskriptionsdaten noch nicht aktualisiert sind. Daher sendet die Basisstation an dieses Endgerät KE2 eine gezielte Resubskriptionsaufforderung RA, erhält von der Basisstation KE2 eine Aktualisierungsanforderungsmeldung AM und sendet daraufhin eine Accept-Meldung mit den aktualisierten Subskriptionsdaten PARK', PLI, IPUI. Abhängig von dieser Accept-Meldung werden in dem Endgerät KE2 die Subskriptionsdaten aktualisiert.

## Patentansprüche

1. Verfahren zum ortsabhängigen Anmelden eines mobilen Endgerätes (KE1, KE2) über eine Luftschnittstelle an einer Basisstation (BS) eines Kommunikationsnetzes (KN), wobei die Basisstation (BS) mit einer ersten Periodizität eine Funkstationskennung (RFPI) mit Primärzugriffskennung (PARI) als Schicht-2-Nachricht aussendet und mit einer zweiten Periodizität eine Sekundärzugriffskennung (SARI) als Schicht-2-Nachricht aussendet, wobei in dem Endgerät (KE1, KE2) mindestens ein bestimmter Teil der Primärzugriffskennung (PARI) bzw. der Sekundärzugriffskennung (SARI) mit mindestens einem Teil von im Endgerät gespeicherten Subskriptionsdaten (PARK) verglichen wird und das Endgerät (KE1, KE2) sich bei positivem Vergleichsergebnis einer Primärzugriffskennung (PARI) als Heimat-Endgerät an der Basisstation (BS) anmeldet und bei positivem Vergleichsergebnis einer Sekundärzugriffskennung (SARI) als Gast-Endgerät an der Basisstation (BS) anmeldet, **dadurch gekennzeichnet, daß** nach einem Ändern der von der Basisstation (BS) ausgesendeten Primärzugriffskennung (PARI) diese Basisstation (BS) die von ihr vor dem Ändern ausgesendete Primärzugriffskennung (PARI) als Sekundärzugriffskennung (SARI) aussendet.

2. Verfahren nach Anspruch 1, wobei nach dem Ändern der von einer Basisstation (BS) ausgesendeten Primärzugriffskennung (PARI)im Kommunikationsnetz erreichbare Endgeräte mit Hilfe einer Aktualisierungsprozedur veranlaßt werden, die in ihnen gespeicherten Subskriptionsdaten derart zu ändern, daß sie sich an einer Basisstation, die die geänderte Primärzugriffskennung (PARI) aussendet, als Heimat-Endgerät anmelden können, **dadurch gekennzeichnet, daß** bei Anmelden eines Endgerätes (KE1, KE2) als Gast-Endgerät an einer Basisstation (BS) innerhalb des Kommunikationsnetzes (KN) überprüft wird, ob dieses Endgerät ein Heimat-Endgerät ohne aktualisierte Subskriptionsdaten ist, um daraufhin die Subskriptionsdaten dieses Endgerätes mit Hilfe der Aktualisierungsprozedur zu aktualisieren.

3. Verfahren nach Anspruch 2, **dadurch gekennzeichnet, daß** nach jeder Aktualisierungsprozedur im Kommunikationsnetz (KN) überprüft wird, ob alle zu aktualisierenden Endgeräte (KE1, KE2) einer Aktualisierungsprozedur unterzogen worden sind und daß bei positivem Überprüfungsergebnis das Aussenden der vor dem Ändern ausgesendeten Primärzugriffskennung (PARI) als Sekundärzugriffskennung (SARI) beendet wird.

## Claims

1. Method for the location registration of a mobile terminal (KE1, KE2) via an air interface at a base station (BS) of a communication network (KN), the base station (BS) broadcasting a radio fixed part identity (RFPI) with primary access rights identity (PARI) as a layer-2 message with a first periodicity and a secondary access rights identity (SARI) as a layer-2 message with a second periodicity, at least a certain part of the primary access rights identity (PARI) and, respectively, of the secondary access rights identity (SARI) being compared in the terminal with at least a part of subscription data (PARK) stored in the terminal and the terminal (KE1, KE2) registering at the base station (BS) as a home terminal in the case of a positive result of the comparison of a primary access rights identity (PARI) and registering at the base station (BS) as a visiting terminal in the case of a positive result of the comparison of a secondary access rights identity (SARI), **characterized in that**, after a change of the primary access rights identity (PARI) broadcast by the base station (BS), this base station (BS) broadcasts as a secondary access rights identity (SARI) the primary access rights identity (PARI) broadcast by it before the change.

2. Method according to Claim 1, wherein, after the change of primary access rights identity (PARI) broadcast by a base station (BS), terminals which can be reached in the communication network are caused to change the subscription data stored within them with the aid of an updating procedure, in such a manner that they can register as a home terminal at a base station which broadcasts the changed primary access rights identity (PARI), **characterized in that** when a terminal (KE1, KE2) registers as a visiting terminal at a base station (BS), it is checked within the communication network (KN) whether this terminal is a home terminal without updated subscription data in order then to update the subscription data of this terminal with the aid of the updating procedure.

3. Method according to Claim 2, **characterized in that**, after each updating procedure, it is checked within the communication network (KN) whether all terminals (KE1, KE2) to be updated have been subjected to an updating procedure and **in that**, in the case of a positive result of the check, the broadcasting as a secondary access rights identity (SARI) of the primary access rights identity (PARI) broadcast before the change is ended.

## Revendications

1. Procédé de connexion, en fonction du lieu et par l'intermédiaire d'une interface radio, d'un terminal mobile (KE1, KE2) à une station de base (BS) d'un réseau de communication (KN), la station de base (BS) émettant, avec une première périodicité, un identificateur de station radio (RFPI) avec identificateur d'accès primaire (PARI) en tant que message de couche 2 et, avec une deuxième périodicité, un identificateur d'accès secondaire (SARI) en tant que message de couche 2, au moins une certaine partie de l'identificateur d'accès primaire (PARI) resp. de l'identificateur d'accès secondaire (SARI) étant comparée, dans le terminal (KE1, KE2), à au moins une partie des données de souscription (PARK) enregistrées dans le terminal et le terminal (KE1, KE2) se connectant en tant que terminal nominal à la station de base (BS) si le résultat de la comparaison est positif et se connectant en tant que terminal visiteur à la station de base (BS) si le résultat de la comparaison d'un identificateur d'accès secondaire (SARI) est positif, **caractérisé en ce que**, après une modification de l'identificateur d'accès primaire (PARI) émis par la station de base (BS), cette station de base (BS) émet en tant qu'identificateur d'accès secondaire (SARI) l'identificateur d'accès primaire (PARI) émis par elle-même avant la modification.

2. Procédé selon la revendication 1, les terminaux joignables dans le réseau de communication se voyant faire modifier, après la modification de l'identificateur d'accès primaire émis par une station de base (BS) et à l'aide d'une procédure d'actualisation, les données de souscription enregistrées en eux-mêmes de manière telle qu'ils peuvent se connecter en tant que terminal nominal à une station de base qui émet l'identificateur d'accès primaire (PARI) modifié, **caractérisé en ce que**, lors de la connexion d'un terminal (KE1, KE2) en tant que terminal visiteur à une station de base (BS) à l'intérieur du réseau de communication (KN), il est vérifié si ce terminal est un terminal nominal sans données de souscription actualisées pour ensuite actualiser les données de souscription de ce terminal à l'aide de la procédure d'actualisation.

3. Procédé selon la revendication 2, **caractérisé en ce qu'**il est vérifié, après chaque procédure d'actualisation, dans le réseau de communication (KN), si tous les terminaux (KE1, KE2) à actualiser ont été soumis à une procédure d'actualisation et **en ce que**, si le résultat de la vérification est positif, l'émission, en tant qu'identificateur d'accès secondaire (SARI), de l'identificateur d'accès primaire (PARI) émis avant la modification est terminée.
